# EUROPEAN PATENT SPECIFICATION

(11) **EP 1 615 967 B1**
(45) Date of publication and mention of the grant of the patent: **16.02.2011**
(21) Application number: 04729327.9
(22) Date of filing: 23.04.2004
(51) Int. Cl.: C08K 5/098

(54) **ADDITIVE FOR THERMOPLASTICS, USE OF AND METHOD FOR ITS MANUFACTURE, METHOD FOR THE MANUFACTURE OF A THERMOPLASTIC CONTAINING SUCH ADDITIVE AND THERMOPLASTIC SO MANUFACTURED**
ADDITIV FÜR THERMOPLASTE, VERWENDUNG DAVON UND VERFAHREN ZU SEINER HERSTELLUNG, VERFAHREN ZUR HERSTELLUNG EINES EIN DERARTIGES ADDITIV ENTHALTENDEN THERMOPLASTS UND SO HERGESTELLTER THERMOPLAST
ADDITIFS POUR RESINES THERMOPLASTIQUES, UTILISATION ET PROCEDE DE FABRICATION DE CES DERNIERS, PROCEDE DE FABRICATION D'UNE RESINE THERMOPLASTIQUE CONTENANT LEDIT ADDITIF ET RESINE THERMOPLASTIQUE FABRIQUEE SELON CE PROCEDE

(30) Priority: 23.04.2003 NO 20031820
(43) Date of publication of application: 18.01.2006
(73) Proprietor: Nor-X Industry AS, 6082 Gursken (NO)
(72) Inventor: MÄNNLE, Ferdinand, N-0139 Oslo (NO); BEYLICH, Jest, N-0470 Oslo (NO); LECERF, NICOLAS, N-0775 Oslo (NO); OLAFSEN, Kjell, N-0883 OSLO (NO); HAUGE, Roger, N-6082 Gursken (NO); RÖDSETH, Kaare Roger, N-6082 Gursken (NO); KLEPPE, Emil Arne, N-6082 Gursken (NO)
(74) Representative: Crawford, Andrew Birkby
(86) International application number: PCT/NO2004/000114
(87) International publication number: WO 2004/094516

(56) References cited:
- WO-A1-92/11298
- US-A- 3 865 767
- US-A- 4 028 480
- US-A- 4 067 836
- US-A- 5 212 219
- US-A- 5 216 043
- DATABASE CAPLUS [Online] WANG J., ET AL.: 'MAnufacture of light and biologically degradable plastics', XP002983220 Retrieved from STN Database accession no. 2001:781838 & CN 1 289 792 A

## Description

The present invention concerns according to a first aspect a method for the manufacture of additives for thermoplastic materials, hereinafter commonly denoted thermoplastic, to provide very light coloured materials with controllable degradation. According to a second aspect the invention concerns additives manufactured by the method according to the first aspect. Furthermore and according to a third aspect, the invention concerns use of such additives and according to a fourth aspect a method for the manufacture of very light coloured thermoplastics using additives according to the second aspect of the invention. Finally the invention concerns thermoplastic materials manufactured in accordance with the fourth aspect of the invention.

### Background

Plastic products such as plastic bags or plastic packaging are commonly made of thermoplastic materials. After having been used once, such plastic products tend to end up in the nature or otherwise in the outside world. With their high surface to volume ratios and usually striking colours these products constitute a visible and undesired environmental pollution. At the same time these plastic products are generally very resistant against degradation, so they may be lying e.g. in woods for several years. It is therefore an object to be able to manufacture plastic bags and other plastic packaging so that they are stable during a period of use but thereafter shortly after their disposal will be degraded.

Commercially available and biologically degradable thermoplastics are based on hydrolysable polymers such as polymers of maize starch or lactide based polymers. Degradable lactide based polymers are described e.g. in US 5,908, 918. Advantages and disadvantages of lactide based polymers in general are described in the literature (e.g. by R. Leaversuch, Plastics Technology, march 2002, 50). Disadvantages of lactide based polymers compared to synthetic polymers like polypropylene are lower rupture strength, higher density, poorer properties at elevated temperatures, poorer barrier properties and not least higher price. An advantage of this type of polymer is the possibility of making transparent products and that the degradation may take place rapidly also in absence of light.

A different strategy for making thermoplastics with significantly increased degradation involves the addition of degradation accelerating additives to commercial thermoplastics like polypropylene or polyethylene. The additions are made to the commercial thermoplastics in the form of concentrated formulations of one or more additive in a convenient matrix material. Such concentrated formulations are called master batches. In general one may distinguish between to types of such master batches that accelerate degradation of commercial thermoplastics.

On one hand the master batch include a hydrolysable material such as modified starch or ester based materials (Plastics Technology, October 2002, 60; U.S. 5,461,093 and U.S. 5,091,262). The master batch with such hydrolysable material is compounded into commercial thermoplastics. When these modified thermoplastics are exposed to heat and humidity over time, the added hydrolysable material becomes hydrolysed thereby rendering the thermoplastic mechanically unstable which means enhanced degradation of the thermoplastic material.

Examples are Polystarch N (Willow Ridge Plastics Inc., USA) and Mater-Bi AF05H (Novamont, USA). The advantage of this method is that the degradation is not dependent on light and that the material may thus be used for an extended time under dry conditions while the degradation is comparatively rapid e.g. when composted. The disadvantage is that the hydrolysable material in the thermoplastics generally leads to a poorer quality such as lower rupture strength, poorer properties at elevated temperatures and poorer barrier properties.

On the other hand master batches comprising one or more additives that under influence of light and/ or heat catalyses an oxidative degradation of a thermoplastics may be added to commercial thermoplastics. In contradiction to master batches of hydrolysable material such additives generally are readily dissolved in commercial thermoplastics. Therefore the properties of the modified thermoplastics are quite similar to the properties of the unmodified thermoplastics. The challenge with this method is to find an additive system that is compatible with the manufacture process of the thermoplastics (film blowing, extrusion, injection moulding). A possible degradation during the manufacture must be eliminated or controlled so that the product gets the desired properties. A particular challenge is that the degradation process takes places much faster when light (particularly with an UV portion) is present than in the dark. Thus the additive or the blend of additives must be chosen in such a way that the product maintains its desired properties within a time period suited for storage and/ or use, and still so that degradation elapses quite rapidly when the product has been discarded.

Known additives leading to accelerated degradation of thermoplastics are metal salts or complex metal compounds in which the metal is able to change its oxidation state (I.I. Eyenga et. al., Macromol. Symp., 178, 139-152 (2002)). Most used are fat soluble compounds of transition metals like cobalt, cerium or iron (US 20010003797; US 5,384,183; US 5,854,304; US 5,565,503; DE 2244801 B2; US 5,212,219) or formulations of transition metal salts with different types of waxes (US 5,155,155). Examples of degradation-controllable thermoplastics comprising a combination of hydrolysable material and metal salts or complex metal compounds are described in US 5,135,966. In addition to metal salts or complex metal compounds so-called photo initiators, materials that under influence of light form radicals, may also be included (US 4,517,318; US 4,038,227; US 3,941,759).

Synthesis of stearates such as iron (ferric) stearate is described in periodicals (H.B. Abrahamson, H.C. Lukaski, Journal of Inorganic Biochemistry, 54, 115-130 (1994)) and patent publications (US 5,434,277). Utilization of iron stearate rather than other transition metal compounds in degradation-controllable thermoplastics does not lead to spill of materials that may be harmful for the environment. With respect to approval of degradation-controllable thermoplastics for indirect contact with articles of food, the restrictions for iron compounds are less demanding than for other transition metal compounds.

The challenge of degradation-controllable thermoplastics based on iron compounds such as iron stearate is that the colour of the stearate dominates the colour of the degradation-controllable thermoplastics. It is therefore an objective to be able to manufacture a type of iron stearate that is so light-coloured that the degradation-controllable thermoplastics to a very low extent differ from the colour of the corresponding non-modified thermoplastics. Known iron compounds such as commercially available iron stearate give the modified thermoplastic a yellow brown or dark brown colour. The modified thermoplastic can therefore not be used in application where white or non-coloured products are requested. In addition a yellow brown or dark brown thermoplastic is not a well suited basis for thermoplastics with defined colour tones that is to be achieved by the addition of dyes or pigments.

Another challenge is the manufacture of additives based on a light-coloured type of iron stearate and which is compatible with the preparation processes of the degradation-controllable thermoplastics, like film blowing, extrusion or injection moulding. For this purpose it is required to add a suited antioxidant as a moderator to the iron stearate. Such antioxidants are generally added to all commercial qualities of thermoplastics. The amount and type of antioxidant required to achieve good processibility for a thermoplastic containing metal compounds like iron stearate, may be different from the amount required for a thermoplastic not containing such metal compounds.

A third challenge is to maintain the properties of products made from iron stearate containing degradation-controllable thermoplastics within a suitable time period for storage and use and still to ensure a sufficiently rapid degradation when the products are discarded. The degradation process in a thermoplastic such as a polyolefin mainly takes place according to the mechanisms e.g. described by Hans Zweifel (ed.), "Plastic additives handbook", Hanser, München, 2000, p. 4 and p. 18. Up-take of oxygen leads to formation of hydro peroxides and subsequent oxidative degradation of the thermoplastic by decomposition of the hydro peroxides. Presence of metal compounds such as iron stearate accelerates the decomposition of hydro peroxides.

The interaction between metal compounds based on cobalt and iron is also known from curing of resins based on unsaturated polyester. The addition of a suitable peroxide would in principle start the curing process by means of a metal compound influenced decomposition of peroxides and thereby the formation of free radicals that would polymerize unsaturated double bonds in the polyester resin. An immediate start of the curing process subsequent to the addition of peroxides is however undesired, since important properties such as viscosity will change continuously during the curing and thereby render it difficult to apply the resin to a surface. Therefore an antioxidant that effectively reacts with the peroxide to avoid the curing for a suitable period of time is generally added. This period of time is often called gel time or induction time. Following this period of time the antioxidant has been consumed and the curing of the polyester generally takes place quite rapidly.

In a corresponding manner it might be assumed that such an antioxidant could be used to delay the degradation process in a thermoplastic with metal compounds such as iron stearate. US 5,212,219 mentions use of an antioxidant in combination with an organic salt of a transition metal compound in a thermoplastic to obtain an induction time before the rigidity of the thermoplastic is rapidly reduced. US 5,212,219 does not describe use of different antioxidants or different concentrations of a certain type of oxidant to control the degradation time. Some examples with somewhat different degradation time of thermoplastic compositions are shown. It is however not disclosed if or how antioxidants affect degradation time. Types of antioxidant mentioned in these examples are frequently used ingredients in all commercial types of thermoplastics

### Objectives

It is an object of the present invention to provide a method for the manufacture of additives to thermoplastics that enables production of modified, very light-coloured thermoplastics with controllable degradation.

It is a further object to provide a method for the manufacture of commercial modified thermoplastics including such additives in combination with suitable other additives, so that the thus modified thermoplastics under certain conditions are provided with a very well controlled rate of degradation, with a very light colour while maintaining a sufficient workability in common thermoplastic preparation processes. Such thermoplastics are suited for use in products also with light colours and with controllable degradation.

### The invention

According to a first aspect the invention concerns a method for the manufacture of additives for thermoplastics that allows production of modified very light-coloured degradation-controllable thermoplastics, the method of manufacture being defined by the characterizing part of claim 1.

According to a second aspect the invention comprises an additive for controlling the degradation of products like thermoplastic, oil and the like as defined by claim 12.

According to a third aspect the invention comprises utilization of a first additive manufactured according to the features defmed by the characterizing part of claim 1 in combination with one or more other additives like antioxidants, radical scavengers, UV absorbers, amines, peroxides and/ or peroxide forming substances for thermoplastics or blends of thermoplastics as defined by claim 14. The type and amount of first additive and types and amounts of other additives and type f thermoplastic or blend of thermoplastics are chosen so that a thermoplastic or blend of thermoplastics is obtained which under certain conditions will have a controllable rate of degradation.

By applying the additive according the invention as defmed above, a skilled artisan will realize that increasing amounts of additive will lead to a more rapid degradation. Thus the progress of degradation may to a certain extent be adjusted by the choice of concentration of additive in combination with a certain thermoplastic or blend of thermoplastics.

Other additives as mentioned above are used to manufacture thermoplastics with very long durability, i.e. no significant degradation over several years.

Antioxidants like hindered phenols and aromatic amines inhibit degradation by acting as hydrogen donators, cf. Hans Zweifel (ed.), "Plastic additives handbook", Hanser, München, 2000, p. 10-18. Radical scavengers such as hindered amines or hydroxyl amines and benzofuranone derivatives inhibit degradation by their binding oxidizing radicals that otherwise would cause oxidative degradation. UV absorbers stop the most energy rich and therefore most destructing part of sunlight. Peroxides may function as oxidizing agents and thereby increase the degradation of a thermoplastic. During preparation use of peroxides may, however, lead to a cross-linking of the thermoplastic, which will reduce its rate of degradation. Peroxide forming substances increase the up-take of oxygen in the material, which leads to a more rapid degradation. Pigments and dyes filter away a portion of the visible sunlight and thereby slow down degradation affected by light.

Utilization of different known additives as mentioned above in combination with the additive according to the invention in a thermoplastic or blend of thermoplastics has proven to provide degradation rates that to a large extent are controllable through choice of type and choice of amounts of the known additives. Hereunder is also included the use of a combination of several known additives simultaneously.

A particular feature that may be exploited in this connection is the per se known stability of each of the known additives against oxidative degradation when exposed to sunlight and/ or heat.

As an example the stability against oxidative degradation of different UV absorbers is in the order Sanduvor PR-25< Chimasorb 81 Cyasorb UV 5911 < Tinuvin 326 < Tinuvin 1577.

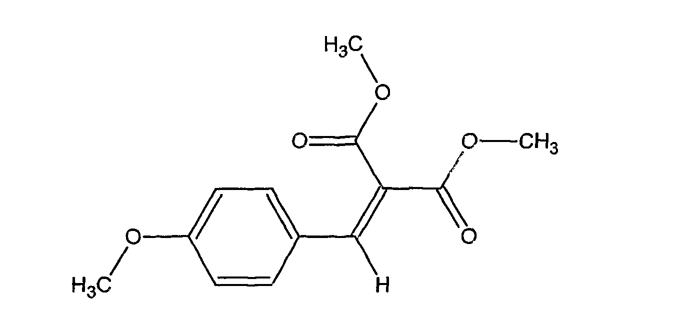

### Sanduvor PR-25 (Clariant AG, Switzerland)

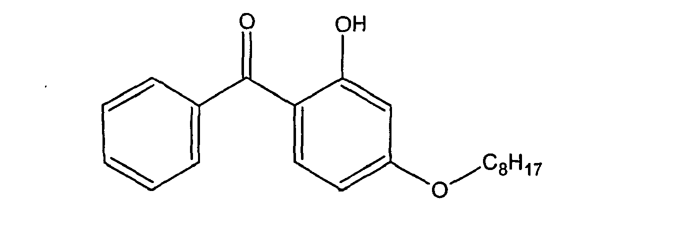

### Chimasorb 81 (Ciba Specialty Chemicals, Switzerland)

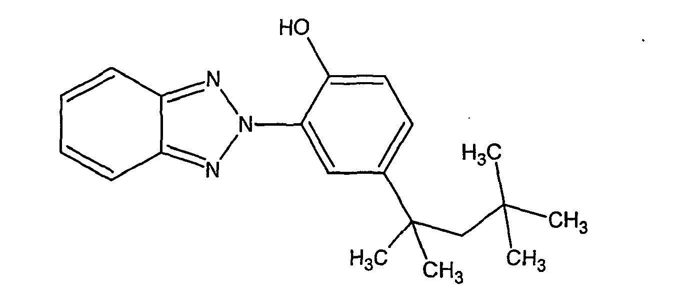

### Cyasorb UV-5411 (Cytec Industries, USA)

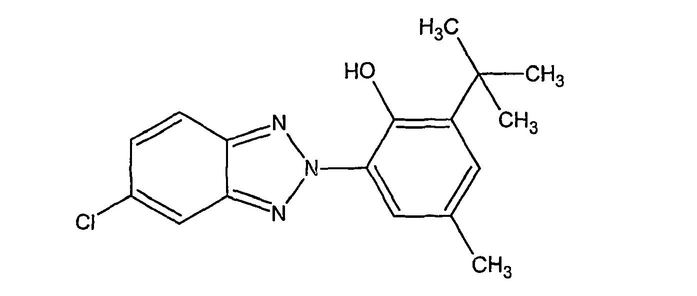

### Tinuvin 326 (Ciba Specialty Chemicals, Switzerland)

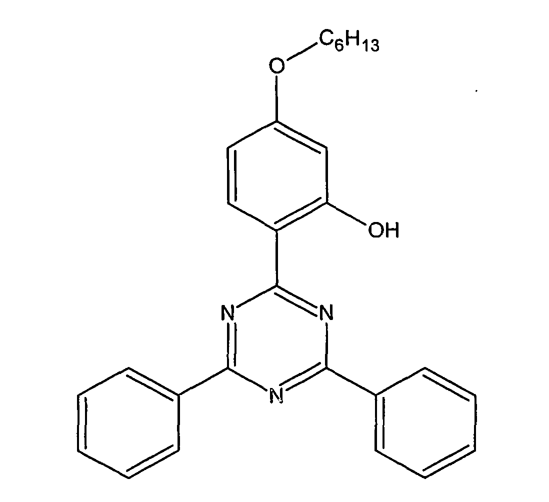

### Tinuvin 1577 (Ciba Specialty Chemicals, Switzerland)

Use of such UV absorbers in combination with the additive according g to the present invention provides a modified, extended period of degradation compared to the one obtained by only using of the additive according to the invention. It is also found that by convenient combinations as mentioned above the degradation time for a certain thermoplastic may be adapted to different needs, as the rapid degradation caused by the additive according to the invention alone may be controlled by the type and amount of the known UV absorber added. UV absorbers with a generally high stability in their isolated state increase the degradation time more than do UV absorbers with lower stability. Thus a combination of the additive according to the invention and Tinuvin 1577 gives a significantly longer degradation time than the combination of the additive according to the invention and Sanduvor PR 25.

Further modifications may be obtained by combining different types of known additives and varying concentrations of the same.

The degradation time for a thermoplastic or blend of thermoplastics is also dependent on their composition. It is well known that polypropylene (PP) degrades more rapidly than polyethylene (PE). Additives according to the present invention may also be used for controlling the degradation rate in combinations of PP and PE and the degradation rate may be reduced by increasing the amount of PE.

According to a fourth aspect the present invention concerns a method as defined by claim 19 for the manufacture of a thermoplastic material with a very light colour that may be film blown, extruded, injection moulded or treated in different ways and that still may be degraded in less than a year under influence of light. As mentioned above the commercial thermoplastics include antioxidants to ensure sufficient stability of the thermoplastics during their preparation. One manner of operation of many such antioxidants is the formation of stable radicals, which prevents oxidative degradation during the preparation of the thermoplastic (cf. " Hans Zweifel (ed.), "Plastic additives handbook", Hanser, München, 2000, p. 12). Oxidation products formed by such antioxidants may lead to discolouration of prepared thermoplastic (cf. " Hans Zweifel (ed.), "Plastic additives handbook", Hanser, München, 2000, p. 13). Therefore it is desirable to reduce the amount of antioxidants used to stabilize the thermoplastic during its preparation to a required minimum.

Presence of additives according to the invention may imply that a certain amount of antioxidant for a short period of time forms a larger amount of stable radicals than the same amount of antioxidants would do without such additives present. Assuming that this short period is comparable to the duration of preparation, the amount of antioxidant used for stabilizing the thermoplastic during its preparation may be reduced if used together with an additive according to the present invention. Thus the risk of discolouration caused by oxidation products formed by antioxidants added to ensure sufficient stability during preparation of the thermoplastic may be reduced.

Finally and according to a fifth aspect the present invention concerns a thermoplastic material as defined by claim 25, manufactured in accordance with the method defined by claim 19.

Preferred embodiments of the invention are disclosed by the dependent claims.

According to a first aspect the invention concerns a method for the manufacture of additives to thermoplastic materials that allows production of very light-coloured thermoplastics with controllable degradation. In general the process comprises a chemical conversion of a metal compound with generally low fat-solubility, preferably present at its highest stable oxidation state at standard conditions (25°C and maximum 98% humidity), with a fat-soluble carboxyl acid or carboxyl acid derivative, thereby forming a product consisting of fat-soluble metal compound. The conversion may be described by the following example where Fe(III) as the metal is present at its highest stable oxidation state at standard conditions:

**Fe³⁺(X⁻)₃ + CₙHₘCOOR → Fe³⁺(CₙHₘCOO⁻)₃ + R-X**

where X is any suited anion like Cl⁻, CH₃COO⁻, NO₃⁻, alkoxylate, R is a small group chosen between alkyl and H and where R-X may be removed from the reaction composition by distillation.

A preferred fatty acid for utilization in the method according to the first aspect of the invention, is stearic acid and the process is largely exemplified by stearic acid. Among the iron salts mentioned above ferric(III)chloride is preferred. The process is conducted by e.g. slowly add an aqueous ferric(III)chloride solution to melted stearic acid. Continuous addition of air and / or batch additions of small amounts of a 2-5 % aqueous hydrogen peroxide solution ensures that the oxidation state (III) of the ferric(III) ions is maintained. This is decisive for the colour of the iron stearate product. The more ferrous(II) compounds resent in the iron stearate product the darker the colour. After conversion the iron stearate product is poured in an excess of 1-3 % aqueous hydrogen peroxide solution. When the subsequent gas development is about to terminate, the iron stearate product is filtered from the liquid phase and thoroughly washed with water to remove any remains of ferric(III)chloride. Thereafter the iron stearate product is dispersed in a 0.5-1% aqueous hydrogen peroxide solution at 45 °C for 2 hours facilitated by a dispersing rod. The dispersed iron stearate product is then filtered from the liquid phase, is washed thoroughly with water and dried in a convection oven or in other suitable manner at 25-50 °C. Alternatively a wax convenient for the purpose is added to the reaction product at the end of the conversion and the end product is finely granulated directly in a 1-2 % hydrogen peroxide solution. Usually one or more of the reactants are dissolved in water. The distillation of water is simplified by use of azeotropic distillation. Such azeotropic distillation may be achieved by use of suitable hydrocarbons or blend of hydrocarbons ("white spirit").

The second aspect of the invention concerns the additive manufactured by the process exemplified above and which constitutes the first aspect of the invention. It also relates to compositions and formulation comprising the additive, like e.g. master batches. Such master batches may simplify the process of adding the additive to thermoplastics, oil and the like. Such master batches may also contain substances that interact with the additive and thereby influence the degradation time of thermoplastics, oil, and the like to which the master batches are added.

According to a third (fourth) aspect the invention relates to the manufacture of modified commercial thermoplastics such a propylene or ethylene comprising an additive according to the second aspect of the invention. The method of manufacture may include compounding in an extruder. The modified thermoplastic is significantly more readily degradable than the unmodified thermoplastic, particularly when exposed to light and heat. Already at concentrations of 0.1% the additive in the form of an iron stearate product a rapid degradation of thermoplastics may be achieved. Such a concentration of the additive represents a preferred embodiment of the third aspect of the invention, cf. claim 21. Concentrations of the additive lower than about 0.03 % by weight have been found not to give the desired effect on the degradation properties. When using iron stearate as additive according the second aspect of the invention, it has been found by numerous tests that a concentration of the additive of 0.5 % by weight solution in poly(1-deken) leads to a Gardner Colour Number according to ASTM 1544 that is equal to or lower than 4. In practice this means that the additive, within the relevant limits of concentration, does not lead to an observable colouring of the end product, even when this is a completely light product of a suitable thermoplastic, e.g. an uncoloured plastic bag.

The degradation processes take place mainly in accordance with the mechanisms that e.g. are described in Hans Zweifel (ed.), "Plastic additives handbook", Hanser, München, 2000, p. 4 and p. 18. To ensure a sufficiently stability of the thermoplastic during its preparation (film blowing, extrusion, injection moulding) the additive must be combined with a suitable antioxidant or a suitable blend of antioxidants. Any degradation during the preparation process should be avoided or diminished so that the product made from the afore mentioned modified thermoplastics possess the desired (material) properties. Suitable antioxidants are primarily so-called process stabilisers such as phosphates, thiosynergists, C-H acid radical scavengers, and phenolic antioxidants or combinations of these. Furthermore radical scavengers based on so-called hindered amine stabilizers

(HAS) and UV absorbers may be used to adjust the shelf life and/ or the degradation rate Also radical forming substances like photo initiators, peroxides, and aromatically substituted hydrocarbons may be used to adjust the degradation rate. Finally also dyes and pigments may be used actively to adjust the degradation rate.

The interaction between the additive according to the invention's second aspect and the mentioned additives in polymer products may be divided into three phases: 1) preparation of the thermoplastic product (like film blowing, extrusion, and injection moulding), 2) storage/ use of the product, and 3) controlled degradation of the plastic product. Different types of additives that interact with an additive in the form of a fat-soluble ferric(III) compound in the different phases are shown in Table 1.

**Table 1**

| **Preparation of the plastic product** | **Storage/ use of the plastic product** | **Controlled degradation of the plastic product** |
|---|---|---|
| *Antioxidants and process stabilizers:* | *Long time stabilizers:* | *Additives that influence the degradation rate:* |
| phosphites, thiosynergists, hindered phenols, hydroquinone compounds, C-H-acid radical scavengers, hydroxyl amines | hindered phenols, HAS, UV absorbers | hindered phenols, HAS, UV absorbers, amines, peroxides, peroxide forming substances, dyes, pigments |

Most of the additives are denoted as stabilizers or polymer additives. Examples of suitable types of additives that interact with the fat-soluble ferric(III) additive, are listed below.

| *Phosphites:* | |
|---|---|
| tetrakis(2,4-di-tert-butylphenyl)[1,1-biphenyl]-4,4'-diylbisphosfonite | [119345-01-6] |
| tris(2,4-ditert-butylphenyl)phosfite | [31570-04-4] |
| phosphoric acid monoethyl-bis[2,4-bis(1,1-dimethylethyl)-6-methylphenyl-ester | [145650-60-8] |
| *Thiosynergists:* | |
| dodecyl-3,3'-dithiopropionate | [123-28-4] |

| *Hindered phenoles:* | |
|---|---|
| tetrakis(3-(3,5-di-tert-butyl-4-hydroxyphenyl)propionyl pentaerytrite | [6683-19-8] |
| 1,3,5-tris-(3,5-di-tert-butyl-4-hydroxyphenyl)methyl-2,4,6-trimethylbenzene | [1709-70-2] |
| 6,6'-di-tert-butyl-2,2'-thiodi-p-cresol | [90-66-4] |

| *Hydroquinone compounds:* | |
|---|---|
| 2,5-di-tert-butyl hydroquinone | [88-558-4] |
| *C-H acid radicals scavengers:* | |
| 3-xylyl-5,7-di-tert-butyl-benzofuranone | [181314-48-7] |

| *Hydroxyl amines:* | |
|---|---|
| distearylhydroxyl amine | [143925-92-2] |

| *Hindered amines:* | |
|---|---|
| N,N"'-[1,2-ethane-diyl-bis[[[4,6-bis-[butyl(1,2,2,6,6-pentamethyl-4-piperidinyl)amino]-1,3,5-triazin-2-yl]imino]-3,1-propanediyl]]-bis[N',N"-dibutyl-N',N"-bis(1,2,2,6,6-pentamethyl-4-piperidinyl)-2,4,6-triamino-1,3,5-triazine | [106990-43-6] |
| Bis(2,2,6,6,-tetramethyl-4-piperidyl)sebaceat | [52829-07-9] |
| *UV absorbers:* | |
| 2-hydroxy-4-(octyloxy)-benzophenone | [1843-05-6] |
| 2-benzotriazol-2-yl-4,6-di-tert-butylphenole | [3846-71-7] |

| *Amines:* | |
|---|---|
| stearylamine | [124-30-1] |
| dodecylamine | [124-22-1] |
| *Peroxides:* dicumyl peroxide | [80-43-3] |
| didecanoyl peroxide | [762-12-9] |
| *Peroxide forming substances:* | |
| 3,4-dimethyl-3,4-diphenylhexane | [10192-93-5] |
| diethyleneglykol diethylether | [112-36-7] |

| *Photo initiators:* | |
|---|---|
| 2-benzyl-2-dimethylamino-1-(4-morpholinophenyl)-butanone-1 | [119313-12-1] |
| Bis(2,4,6-trimethylbenzoyl)-phenylphosphine oxide | [162881-26-7] |

| *Dyes:* | |
|---|---|
| rhodamine B base | [509-34-2] |

| *Pigment:* | |
|---|---|
| pigment red 3 | [2425-85-6] |

The fifth aspect of the invention concerns the thermoplastic materials manufactured in accordance with the third (fourth) aspect of the invention. Such thermoplastic materials may be used to tailor plastic products with controlled degradation e.g. for use as degradation-controllable packaging like plastic bags, co-extruded food packaging or garbage bags. Such thermoplastic materials may also have the form of disposable products like nonce-use syringes or disposable cutlery. In addition the mentioned degradation-controllable thermoplastic may be used for products where a controlled degradation during the lifetime of the product is desired. Examples are foil for agricultural use to temporarily prevent growth of grass for a certain period of time or films/ thermoplastic coatings intended to protect an underlying layer for a limited period of time. Liquid mixtures of the ferric additive may find use in degradation of oil spill under influence of air and sunlight. In this connection ferric additives prepared according to reaction equation I with n 8 and dissolved in peroxide forming water soluble and fat-soluble solvents like mono or poly glycol ethers, are particularly interesting.

Main differences between the present invention and the methods and products formerly described, are generally commented below. The present invention provides an additive with significantly lighter colour than former iron stearate products. Added to commercial thermoplastic materials the additive of the invention is very effective as a degradation catalyst. Already at a concentration of 0.1 % a rapid degradation of thermoplastfeics is achieved. (Avoiding) Degradation during preparation of the thermoplastic and an adjustment of the shelf life or degradation time is achieved by use of adapted amounts of suitable antioxidants and other additives. Accurate adaptation of the concentrations of antioxidants, other optional additives and the additive according to the present invention, renders it possible to make degradation-controllable thermoplastics with tailormade shelf life and degradation time, particularly if the degradation takes place in presence of light.

As far as the inventors know there is no previous publication that comments iron stearate products or other fat-soluble products of iron and fatty acids with high activity as degradation catalysts and which also are very light-coloured.

Neither are the inventors aware of publications where an accurate interaction between a fat-soluble ferric(III) compound and antioxidants ensure a tailormade preparation time, shelf life (storage period) and degradation time.

### Preferred embodiments

The oxidizing agent utilized in the method according to the first aspect of the present invention may vary, but hydrogen peroxide has been found to be a very well suited oxidizing agent. The concentration of the oxidizing agent may vary within wide limits dependent on the area of use, the product, optional use of other additives and the desired end properties. Concentrations lower than about 0.1 % aqueous solution generally does not provide the desired effect while concentrations higher than about 5 % generally leads to an undesirable high consumption of the oxidizing agent and involves a risk of vigorous and uncontrollable reaction courses.

Other preferred oxidizing agents are organic peroxides and hydro peroxides as well as oxygen-enriched air.

In the method according to the first aspect of the present invention it is preferred to add a certain stoichiometric excess of the organic fatty acid or derivative thereof compared to the metal salt, e.g. an excess of 20%. Thereby is avoided or limited precipitation of dark iron oxide compounds that would have an undesired effect on the colour of the ferric additive. It is furthermore preferred that the fat-soluble metal compound (the product) is washed with an aqueous solution of the hydrogen peroxide to remove any remains of unreacted metal salt and that the product is thereafter dispersed in a diluted solution of hydrogen peroxide at 35-55 °C for 1 to 3 hours, washed with pure water and finally dried in a convection oven.

It has also proven beneficial at the process of manufacture to add some wax to bind the product to solid lumps that does not raise dust.

The volatile reaction products and/ or reactants are removed preferably be way of azeotropical distillation.

While different metal may be used for the metal salt, such as iron, manganese and cerium, the most preferred metal is iron, as its highest stable oxidation state is 3.

The most preferred thermoplastics are polyethylene and polypropylene and combinations thereof.

Particularly preferred among the per se known additives are Sanduvor PR25™, Chimassorb 81™, Cyasorb UV 5911™, Tinuvin 326™, and Tinuvin 1577™.

### Examples

### 1. Synthesis of fat-soluble iron containing additive

a) The synthesis is performer in a heatable 5 litre glass reactor with two charging hoppers, a mechanically powered glass stirrer, a glass jacketed thermometer, a distillation cooler, an adjustable air inlet and a bottom valve. 2.180 kg (7.66 moles) of stearic acid is melted in the reactor. The air inlet rate is adjusted to about 200 ml air per minute and the temperature of the reactor is adjusted to 120 °C. 600 g (2.22 moles) ferric(III)chloride hexahydrate is dissolved in 600 ml of water to obtain about 900 ml aqueous ferric(III) chloride solution. Through one of the charging hoppers melted stearic acid is added to the ferric(III)chloride solution with a rate of 20 ml per minute. The addition of the aqueous ferric(III)chloride solution is adjusted so that the amount of distilled water and hydrogen chloride corresponds to the amount aqueous ferric(III)chloride solution supplied. Continuous supply of air and addition of 2 ml per minute of a 3% aqueous hydrogen peroxide solution through the other charging hopper ensures that the oxidation state (III) of the ferric(III) ions is maintained. After having completed the addition of the aqueous ferric(III)chloride solution the blend is boiled and distilled under continuous addition of air and the addition of 5 ml per minute of a 3% aqueous hydrogen peroxide solution until the definite yellow colour of the aqueous ferric(III) chloride solution not longer van be observed, Thereafter the iron stearate product is discharged through the bottom valve in 10 litre 3% aqueous hydrogen peroxide solution. When the subsequent gas development is about to end the iron stearate product is filtered from the liquid phase and washed thoroughly with water to remove any remains of ferric(III)chloride. The iron stearate product is then dispersed in a 1% aqueous hydrogen peroxide solution at 45°C for 2 hours, facilitated by a dispersing rod. The dispersed iron stearate product is filtered from the liquid phase, washed thoroughly with water and dried in a convection oven at 50°C.
b) The synthesis is performed in an oil thermostated 20 litres double wall glass reactor with two charging hoppers, a mechanically powered Teflon coated steel stirrer, a glass jacketed thermometer, a distillation cooler and a bottom valve. 3.238 kg (11.38 moles) stearic acid is melted in the reactor. The temperature in the oil thermostat is set to 160°C. 854 g (3.16 moles) ferric(III)chloride hexahydrate is dissolved in 1383 ml of water to obtain about 1800 ml of an aqueous ferric(III)chloride solution. Through one of the charging hoppers melted stearic acid is added to the ferric(III) chloride solution with a rate of 10-15 ml per minute. The addition of aqueous ferric(III)chloride solution is adjusted so that the amount of distilled water and hydrogen chloride corresponds to the amount aqueous ferric(III)chloride solution added. Addition of 2 ml per minute of a 3% aqueous hydrogen peroxide solution through the other charging hopper ensures that the oxidation level (III) of the ferric(III) ions is maintained. After having completed the addition of the aqueous ferric(III)chloride solution the blend is boiled and distilled under continuous addition of 5 ml per minute of a 3% aqueous hydrogen peroxide solution until the definite yellow colour of the aqueous ferric(III) chloride solution not longer van be observed. Thereafter the iron stearate product is discharged through the bottom valve in 20 litre 1% aqueous hydrogen peroxide solution. When the subsequent gas development is about to end the iron stearate product is filtered from the liquid phase and washed thoroughly with water to remove any remains of ferric(III)chloride. The iron stearate product is then dispersed in a 1% aqueous hydrogen peroxide solution at 45 °C for 2 hours, facilitated by a dispersing rod. The dispersed iron stearate product is filtered from the liquid phase, washed thoroughly with water and dried in a convection oven at 50 °C.
c) The synthesis is performed in an oil thermostated 20 litres double wall glass reactor with two charging hoppers, a mechanically powered Teflon coated steel stirrer, a glass jacketed thermometer, a distillation cooler and a bottom valve. 2.970 kg (10.44 moles) stearic acid is melted in the reactor in presence of 504 ml white spirit (Statoil, fraction C₈ - C_{12,} containing aromatic) and 354 ml water. The temperature of the oil thermostat is set to 160°C. 784 g (2.90 moles) ferric(IIII)chloride hexahydrate is dissolved in 1269 ml of water to obtain about 1800 ml of an aqueous ferric(III)chloride solution. When the distillation of water/ white spirit azeotrope has commenced, the aqueous ferric(III)chloride solution is added through one of the charging hoppers with a rate of 10-15 ml per minute. The addition of aqueous ferric(III)chloride solution is adjusted so that the amount of distilled water and hydrogen chloride corresponds to the amount aqueous ferric(III)chloride solution added. Addition of 2 ml per minute of a 3% aqueous hydrogen peroxide solution through the other charging hopper ensures that the oxidation level (III) of the ferric(III) ions is maintained. After having completed the addition of the aqueous ferric(III)chloride solution the blend is boiled and distilled under continuous addition of 5 ml per minute of a 3% aqueous hydrogen peroxide solution until the definite yellow colour of the aqueous ferric(III) chloride solution not longer van be observed and the white spirit is almost completely distilled off. The reaction composition is cooled to 102 °C and 2000 kg polyethylene wax is added. The reaction composition is heated during addition of 3% aqueous hydrogen peroxide solution (2 ml per minute) and distilled for 10 minutes with oil thermostat temperature 160°C. Thereafter the reaction composition is cooled to 102 C. The product is discharged through the bottom valve into a 20 litre 1% aqueous hydrogen peroxide solution under vigorous agitation of the latter. The product is thoroughly washed with water and dried in a convection oven at 50°C.
d) Fe(O-tert-butyl)₃ was manufactured by a salt elimination reaction of water free FeCl₃ (8.60 g, 0.059 moles) and Na- O-tert-butyl (8.6 g, 0,178 moles) in tetrahydrofurane. The reaction mixture was heated to 60 °C and stirred in a dry nitrogen atmosphere for several hours. Precipitated NaCl was removed by filtration. Vacuum drying and sublimation of the product at 80°C and 0.01 mbar yielded 6.7 g pure and crystalline [Fe(µ-O-tert-butyl)(O-tert-butyl)₂]₂. The product was reacted with stearic acid (52.6 g, 0.185 moles) in nitrogenous atmosphere under heating to 85°C. The faint yellow product was stirred at 85°C for 10 minutes while adding air to produce a fat-soluble, very light-coloured and pure iron compound.

### 2. Synthesis of a fat-soluble additive based on other metals than iron

a) In a 100 ml oil-bath heated glass flask with distillation cooler and charging hopper, cerium tetra hydroxide (4.16 g, 0.02 moles) was heated with 2-ethylhexane acid (13.84 g, 0.096 moles) and a combination of 15.1 g water, 0.2 g hydrochloric acid (37%) and 0.3 ml hydrogen peroxide (2%). The temperature of the oil bath was adjusted to 160 °C and the mixture was distilled under continuous addition of 2% hydrogen peroxide solution at a rate of 1 ml/ minute. When more than 80 % of the total added amount of water had been distilled off, 8 g polyethylene wax was added. The product was heated and distilled for 10 minutes and under agitation poured into a 200 ml 1% hydrogen peroxide solution. The product was washed, filtrated, washed with water and dried at 50°C.
b) In a 100 ml oil-bath heated glass flask with distillation cooler and charging hopper, potassium permanganate (3.16 g, 0.02 moles) was heated with 2-ethylhexane acid (13.84 g, 0.096 moles) and a combination of 15.1 g water and 0.76 g sulphuric acid. The oil-bath was adjusted to 160 °C and the mixture was distilled under careful and continuous addition of 1% hydrogen peroxide solution at a rate of about 1 ml/ minute. When more than 80 % of the total amount of added water had been distilled off, and the typical deep violet colour of potassium permanganate had disappeared, 6 g polyethylene wax was added. The product was heated and distilled for 10 minutes and under agitation poured into a 200 ml 1% hydrogen peroxide solution. The product was washed, filtrated, washed with water and dried at 50°C.

### 3. Gardner Colour Number (ASTM 1544)

Solutions in poly (1-deken) was prepared with different fat-soluble iron compounds (products). Gardner Colour Numbers for all solutions were determined according to ASTM 1544. The results are shown in table 2.

**Table 2**

| **Fat-soluble iron compound** | **Gardner Colour Number** |
|---|---|
| Fat-soluble ferric compound as prepared according to **1a)** | 4 |
| Fat-soluble ferric compound as prepared according to **1c)** | 1-2 |
| Fat-soluble ferric compound as prepared according to **1d)** | 1 |
| Fat-soluble ferric compound as prepared according to **2a)** | 1-2 |
| Fat-soluble ferric compound as prepared according to **2b)** | <1 |
| Ferrous(II)stearate from ABCR (Karlsruhe, Germany) | 12 |
| Ferrous(II)stearate from OM-Group (Ohio, USA) | 18 |

### 4. Analysis of the iron content in fat-soluble iron compounds

A reagent solution is made wherein 1000 ml of the solution contains:

| | |
|---|---|
| 1,10-phenantroline | 5.40 g |
| Sodium sulphate | 18.90 g |
| Sodium dihydrogen phosphate-monohydrate | 20.70 g |
| Ethanol | 250 ml |
| Water | to 1000 ml |

Approximately 20 mg fat-soluble iron product from Experiments 1a) - 1c), 25 ml reagent solution and 5 ml of xylene were heated with reflux and vigorous agitation for 10 minutes.

The mixture was coloured deeply red and the depth of the colour is dependent upon the iron concentration. 5 ml of the water phase if the reaction mixture was taken out and centrifuged. The colour-depth of this water phase subsequent to centrifugation was determined by a UV-VIS spectrophotometer with diode array detector (Hewlett Packard HP 8453). The iron content is determined as per cent by weight by analysing and comparing the known compounds of ferrous(II) sulphate, ferric(III) chloride, and ferrous(II) stearate (ABCR).

For a better comparison parts of or whole of the water phase is filtered off.

| **Fat-soluble iron compound from** | **Iron content (per cent by weight)** |
|---|---|
| Experiment 1a) | 1.6 % |
| Experiment 1b) | 1.8 % |
| Experiment 1c) | 3.1 % |

### 5.. Manufacture of master batch: Extrusion of fat-soluble iron product from 1. and eten/ okten copolymer (LLDPE)

10% fat-soluble iron product from 1c) is combined with 90% LLDPE of the type 0230 (eten/okten copolymer; Exxon) in a twin-screw extruder (Clextral) at 130 °C and a detention time of 60-70 seconds. The thus manufactured master batch has an even light brown colour and does not show signs of degradation.

In the same manner there were produced master batches of commercial polymer additives and LLDPE.

Table 3 shows an overview of the produced master batches.

**Table 3: Prepared master batches**

| **Name** | **Basic polymer** | **Added polymer additive** |
|---|---|---|
| Master batch A | LLDPE 0230 | 2% Irgafos XP 60 |
| Master batch B | LLDPE 0230 | 2% Irganox HP 2215 |
| Master batch C | LLDPE 0230 | 2% Irganox B220 |
| Master batch D | LLDPE 0230 | 10% fat-soluble iron product as prepared in 1 |
| Master batch E | LLDPE 0230 | 20% fat-soluble iron product as prepared in 1 |
| Master batch F | LLDPE 0230 | Without additive |

Irgafos XP 60 is a product from Ciba Specialty Chemicals (Basel, Switzerland) and is comprised by 33 % aryl benzofuranone stabilizer [181314-48-7], and 67% phosphite stabilizer [26741-53-7].

Irgafos HP 2215 is a product from Ciba Specialty Chemicals (Basel, Switzerland) and is comprised by 57% phosphite stabilizer [31570-04-4], 28% hindered phenol stabilizer [6683-19-8] and 15% aryl benzofuranone stabilizer [181314-48-7].

Irganox B220 is a product from Ciba Specialty Chemicals (Basel, Switzerland) and is comprised by 75% phosphite stabilizer [31570-04-4], and 25% hindered phenol stabilizer [6683-19-8].

### 6. Manufacture of different polymer qualities

Different polymer qualities were prepared by extrusion of polypropylene homopolymer qualities HG¤30MO, and HC115MO (Borealis, Stathelle, Norway) and the master batches of table 3. The thus prepared polymer qualities (compounds) are shown in table 4.

**Table 4a: Prepared polymer qualities**

| **Compound No.** | **Polypropylene homopolymer quality** | **Master batch(es) (s. tabell 3)** |
|---|---|---|
| 10 | HG430MO | 4.0% C + 5.0% F |
| 11 | HG430MO | 4.0% C + 5.0% D |
| 20 | HC115MO | 2.5% A + 2.5%F |
| 21 | HC115MO | 2.5% A + 2.5% E |
| 22 | HC115MO | 2.5% A + 0.5% E |
| 30 | HC115MO | 2.5% B + 2.5% F |
| 31 | HC115MO | 2.5%B+2.5%E |
| 32 | HC115MO | 7.5% B + 0.5% E |
| 33 | HC115MO | 7.5% B + 1.5% E |
| 34 | HC115MO | 7.5% B + 2.5% E |

In addition three polymer compounds were prepared based on the fat-soluble metal compounds prepared in Experiment 1c), 2a), and 2b). The prepared polymer compounds are comprised by 1% fat-soluble metal compound and 99% PP-homopolymer (HE 125MO, Borealis AS) as shown in table 4b.

**Table 4b**

| **Polymer compound** | **PP homopolymer** | **Fat-soluble metal compound** |
|---|---|---|
| 50 | 99% HE 125 MO | Experiment 1c) (1%) |
| 60 | 99% HE 125 MO | Experiment 2a) (1%) |
| 70 | 99% HE 125 MO | Experiment 2b) (1%) |

### 7. Manufacture of test probes for tensile strength testing

Based on the different compounds listed in table 4, test probes were prepared according to ASTM D 3641. The test probes were later used for testing of tensile strength.

### 8. Preparation of film samples by hot-pressing

Based on several compounds in table 4a, film samples were pressed by hot-pressing. The film samples had a thickness of 20-40 µm (micron). In addition film samples were prepared by hot-pressing of all polymer compounds listed in table 4b. These film samples had a thickness of about 100 µm.

### 9. Preparation of film samples by foil blowing

a) Combinations of PP homo polymer (HE125MO, Borealis AS), LLDPE (FG5190, Borealis AS) and fat-soluble iron products from Experiment 1c) (as master batch 10% in HE125MO), were compounded in a twin-screw extruder and granulated. A film was blown of the granulate with a **labor** film blowing machine. No antioxidant waas added to the compound except what is included in the HE 125MO and FG5190 as such (minor amounts of the combination phenol/ phosphite). The titan dioxide master batch was delivered by Kunststoffteknikk Norge AS and was comprised by 60% titan dioxide (rutil) and 40% PP homopolymer. The foils had a thicknes of 30-40 µm. Table 5 shows he film qualities made.

**Table 5**

| Foil No. | Iron compound | PP | LLDPE | Other additive (MB) |
|---|---|---|---|---|
| FG-1H | 5 % | 82 % | 10 % | 3% titan dioxide |
| FG-1 | 5 % | 85 % | 10 % | --- |
| FG-2 | 5 % | 75 % | 20 % | --- |
| FG-3 | 5 % | 55 % | 40 % | --- |
| FG-4 | 5 % | 35 % | 60 % | --- |
| FG-5 | 5 % | 15 % | 80 % | --- |

b) In a similar way foils were made with a thickness of 30-40 µm by dry treating of master batch of fat-soluble iron compound (10% iron compound from the Experiment 1c) in HE125MO, PP homopolymer (HE125MO), LLDPE (FG5190), and master batch other additive directly into the film blowing machine. The master batches Irgafos XP 60 - 1 to Irgafos XP 60 - 4 contained 8%, 6%, 4%, and 2% respectively of Irgafos XP 60 in FG5190. All other master batches contained 5% additives. In the master batch with the Perkadox BC peroxide, FG5190 granulate was impregnated with a solution of Perkadox BC. This master batch was not compounded.

| Foil No. | Iron compound (MB) | PP | LLDPE | Other additive (MB) | Provider of other additive |
|---|---|---|---|---|---|
| 40416-01 | 1 % | 49 % | 50 % | --- | --- |
| 40416-02 | 3 % | 47 % | 50 % | --- | --- |
| 40416-03 | 5 % | 45 % | 50 % | --- | --- |
| 40416-04 | 10 % | 40 % | 50 % | --- | --- |
| 40416-05 | 5 % | 45 % | 45 % | 5% Tinuvin 770 | Ciba Special. Chem. |
| 40416-06 | 8 % | 42 % | 42 % | 8% Irgafos XP 60 - 1 | Ciba Special. Chem. |
| 40416-07 | 6 % | 44 % | 44 % | 6% Irgafos XP 60 - 2 | Ciba Special. Chem. |
| 40416-08 | 4 % | 46 % | 46 % | 4% Irgafos XP 60 - 3 | Ciba Special. Chem. |
| 40416-09 | 2 % | 48 % | 48 % | 2%Irgafos XP 60 - 4 | Ciba Special. Chem. |
| 40416-10 | 5 % | 45 % | 45 % | 5% Sanduvor PR-25 | Clariant |
| 40416-11 | 5 % | 45 % | 45 % | 5% Cyasorb UV-541 | Cytec Industries |
| 40416-12 | 5 % | 45 % | 45 % | 5% Chimasorb 81 | Ciba Special. Chem. |
| 40416-13 | 5 % | 45 % | 45 % | 5% Tinuvin 1577 | Ciba Special. Chem. |
| 40416-14 | 5 % | 45 % | 45 % | 5% stearylamin | Aldrich Chemicals |
| 40416-15 | 5 % | 45 % | 45 % | 5%Armostat300 | AkzoNobel |
| 40416-16 | 1 % | 49 % | 49 % | 1% Perkadox BC | AkzoNobel |
| 40416-17 | 5 % | 45 % | 45 % | 5% Chimasorb 944 | Ciba Special. Chem. |
| 40416-18 | 5 % | 45 % | 45 % | 5% Irganox B 921 | Ciba Special. Chem. |
| 40416-19 | 5 % | 45 % | 45 % | 5% Tinuvin 783 | Ciba Special. Chem. |

### Characterizing and testing

### a) Accelerated ageing of tensile samples and foils

Test probes made as under Example 7 and foil made as under Example 8 were subjected to accelerated ageing according to ISO 4892-3. The test instrument was an Atlas UVCON weather-o-meter (Atlas Inc., USA) equipped with UVA 340 fluorescent bulbs. The test cycle comprised 4 hours of UV radiation during dry heating to 60°C, 30 minutes water spray at 10-12 °C and 3 hours and 30 minutes condensation at 40 °C.

### b) Tensile strength testing according to ASTM D638 of test probes before and after UVCON exposure

Test probes prepared as under "Example 7" and partially subjected to accelerated ageing as described under "characterizing and testing a)", were subjected to tensile strength tests according to ASTM D638. The results from these tests are given as E-module [MPa], maximum tensile strength [MPa], and elongation at break [%]. Table 5a and table 5b show the results from the tensile test.

**Table 5a: Results of tensile tests**

| **Compound nr:** | **Accelerated ageing [hours]** | **E module [Mpa]** | **Maximum tensile strength [Mpa]** | **Elongation at break [%]** |
|---|---|---|---|---|
| Compound # 11: | 0 | 1347 ± 49 | 31.9 ± 0.3 | 472 ± 94 |
| Compound #11: | 48 | 1275 ± 80 | 30.0 ± 0.5 | 18 ± 5 |
| Compound #10: | 0 | 1345 ± 216 | 33.1 ± 0.5 | 393 ± 185 |
| Compound #10: | 48 | 1372 ± 116 | 33.2 ± 0.6 | 337 ± 134 |
| Compound #31 | 0 | 1364 ± 162 | 32 ± 1 | 275 ± 51 |
| Compound #31 | 48 | 1533 ± 54 | 28 ± 1 | 11 ± 8 |

**Table 5b: Results of tensile tests**

| **Compound nr:** | **Accelerated ageing [hours]** | **E module [Mpa]** | **Maximum tensile strength [Mpa]** | **Elongation at break [%]** |
|---|---|---|---|---|
| Compound #20: | 0 | 1599 ± 52 | 35.1 ± 0.4 | 186 ± 51 |
| Compound #20: | 75 | 1382 ± 53 | 36.0 ± 0.4 | 63 ± 8 |
| Compound #21 | 0 | 1353 ± 20 | 32.2 ± 0.3 | 409 ± 101 |
| Compound #21 | 26 | 1371 ± 59 | 29.8 ± 0.6 | 12 ± 1 |
| Compound #21 | 75 | 1222 ± 56 | 28.2 ± 0.6 | 7 ± 1 |
| Compound #22 | 0 | 1432 ± 51 | 34.0 ± 0.1 | 143 ± 14 |
| Compound #22 | 26 | 1314 ± 71 | 31.0 ± 3.0 | 6 ± 6 |
| Compound #22 | 273 | 1293 ± 69 | 26.8 ± 1.1 | 6 ± 1 |
| Compound #30: | 0 | 1624 ± 124 | 35.1 ± 0.4 | 107 ± 60 |
| Compound #30: | 75 | 1442 ± 141 | 35.0 ± 2.4 | 50 ± 37 |
| Compound #32 | 0 | 1160 ± 143 | 31.0 ± 0.3 | 686 ± 175 |
| Compound #32 | 26 | 1229 ± 61 | 33.0 ± 0.4 | 412 ± 132 |
| Compound #32 | 75 | 1321 ± 21 | 23.2 ± 3.9 | 2 ± 0 |
| Compound #32 | 273 | 962 ± 62 | 21.5 ± 0.2 | 4 ± 1 |
| Compound #33 | 0 | 1249 ± 51 | 31.3 ± 0.6 | 709 ± 129 |
| Compound #33 | 26 | 1214 ± 57 | 31.3 ± 1.1 | 235 ± 191 |
| Compound #33 | 75 | 1097 ± 88 | 26.3 ± 0.2 | 6 ± 2 |
| Compound #33 | 273 | 928 ± 65 | 21.7 ± 0.2 | 5 ± 1 |
| Compound #33 | 0 | 1137 ± 114 | 30.8 ± 0.6 | 804 ± 107 |
| Compound #33 | 26 | 1177 ± 78 | 28.7 ± 1.5 | 9 ± 4 |
| Compound #33 | 75 | 1022 ± 49 | 25.6 ± 0.3 | 62 ± 35 |
| Compound #33 | 273 | 953 ± 33 | 21.8 ± 0.7 | 7 ± 1 |

The results shown in table 5a and 5b indicate that the plastic processibility properties and the degradation rate of the polymer material are controllable to a sufficient degree by convenient choice of polymer composition, type and concentration of polymer additive (stabilizer) and concentration of fat-soluble additive from "Example 1".

It is clearly seen that the elongation at break for test probes containing the fat-soluble iron containing additive from "Example 1a)", is significantly reduced already after 26 hours or 48 hours of accelerated ageing. Test probes without fat-soluble iron containing additives from "Example 1", show no significant difference in elongation at break before and after accelerated ageing under similar conditions. Accelerated ageing in periods of 26 hours or 48 hours under the mentioned conditions should be regarded as extremely short ageing periods. It may therefore be concluded that the iron stearate product is a very active degradation catalyst in thermoplastics.

### c) Hot-pressed film samples after accelerated ageing and after natural ageing

Hot-pressed film samples of compound # 31 with a thickness of 20 - 40 µm are uncoloured, flexible, and have high tensile strength.

After 70 hours of accelerated ageing as described in a), the film samples have become light yellow, fragile and are without any tensile strength worth mentioning.

After 5 weeks of natural ageing under influence of sun, air and rain at Gursken, Sunnmøre (Norway), the film samples turned fragile and started to decompose. This implies a factor 12 between the accelerated ageing as described in a) and this natural ageing in Norway, which may be recognized as a common accelerating factor.

In addition hot-pressed film samples from table 4b were subjected to accelerated ageing as described in a). After 27 hours of accelerated ageing, ductility and the general condition of the samples were assessed with a grade as described in d). The results are shown in table 6.

**Table 6**

| Polymer compound | Ductility / condition after 27 hours of accelerated ageing | Ductility / condition after 53 hours of accelerated ageing |
|---|---|---|
| 50 | 3 | 1 |
| 60 | 3 | 2 |
| 70 | 4 | 2 |

The results show that also the particular metal chosen for the fat-soluble metal compound may influence the degradation time.

### d) Accelerated ageing of film samples from Experiment 9 according to ISO 4892

The film samples from Experiment 9 was subjected to accelerated ageing as described under a). The degradation progress was characterized by assessing the ductility and the condition of the foil with a simple test. A screwdriver with a weight of 87.0 grams and a rectangular point of width 6.5 mm and depth 1mm was dropped from 10 cm above the samples, the samples being mounted in adapted standard sample holders belonging to Atlas UVCON weather-o-meter (Atlas Inc, USA). The adaption consisted in 3 mm thick polyethylene boards ensuring that the foil did not stick to the metal plate of the sample holder. Ductility anf the condition of the tests were assessed according to the flowing grades:
1 the film sample is falling apart, pieces missing
2 the film sample shows visible cracks before fall test
3 the film sample shows cracks in more than 3 out of 10 fall tests
4 the film sample shows cracks in less than 3 out of 10 fall tests
5 the film sample does not show any cracks after 10 fall tests

The results are shown in table 7, table 8 and table 9

| Table 7 | | | | | | |
|---|---|---|---|---|---|---|
| Foil No. for | acc. ageing 0 Hours | acc. ageing for 18 hours | acc. ageing for 40 hours | acc. ageing for 67 hours | acc. ageing for 93 hours | |
| 40416-01 | 5 | 5 | 5 | 5 | 4 | |
| 40416-02 | 5 | 5 | 5 | 4 | 3 | |
| 40416-03 | 5 | 5 | 5 | 4 | 3 | |
| 40416-04 | 5 | 5 | 5 | 2 | 1 | |
| 40416-06 | 5 | 5 | 5 | 2 | 1 | |
| 40416-07 | 5 | 5 | 5 | 4 | 3 | |
| 40416-08 | 5 | 5 | 5 | 4 | 4 | |
| 40416-09 | 5 | 5 | 5 | 5 | 5 | |
| 40416-14 | 5 | 5 | 5 | 4 | 4 | |
| 40416-15 | 5 | 5 | 5 | 4 | 3 | |
| 40416-16 | 5 | 5 | 5 | 5 | 5 | |
| 40416-18 | 5 | 5 | 5 | 5 | 4 | |
| | | | | | | |

| Table 8 | | | | | | |
|---|---|---|---|---|---|---|
| Foil No. | acc. ageing for 0 hours | acc. ageing for 18 hours | acc. ageing for 40 hours | acc. ageing for 67 hours | acc. ageing for 93 hours | |
| FG-1H | 5 | 4 | 3 | 2 | 1 | |
| FG-1 | 5 | 3 | 2 | 1 | --- | |
| FG-2 | 5 | 4 | 2 | 1 | --- | |
| FG-3 | 5 | 5 | 5 | 3 | 2 | |
| FG-4 | 5 | 5 | 5 | 4 | 3 | |
| FG-5 | 5 | 5 | 5 | 5 | 4 | |
| | | | | | | |

| Table 9 | | | | | | |
|---|---|---|---|---|---|---|
| Foil No. | acc. ageing for 0 hours | acc. ageing for 67 hours | ace. ageing for 85 hours | acc. ageing for 107 | acc. ageing for 134 | acc. for 16 |
| 40416-05 | 5 | 5 | 5 | 5 | 5 | |
| 40416-10 | 5 | 5 | 4 | 2 | 1 | |
| 40416-11 | 5 | 5 | 4 | 3 | 2 | |
| 40416-12 | 5 | 5 | 4 | 3 | 2 | |
| 40416-13 | 5 | 5 | 5 | 4 | 4 | |
| 40416-17 | 5 | 5 | 5 | 5 | 5 | |
| 40416-19 | 5 | 5 | 5 | 5 | 5 | |

It is clearly seen that the degradation time of thermoplastic compositions subjected to accelerated ageing according to ISO 4893-2 is highly controllable through the variation of the added amount of fat-soluble iron compound, type and amount of other additives and the composition of the thermoplastic itself. It is thus to be expected that the degradation times of thermoplastic compositions that are subjected to natural ageing also are highly controllable.

### e) Accelerated ageing of film samples from Experiment 9 in an air circulated convection oven

Several film samples from Experiment 9 were subjected to accelerated ageing in an air circulated convection oven at 120 C. The degradation progress was characterized by assessing the ductility and the condition of the foil by the simple test described under d). The results are shown in table 10 and table 11.

| Table 10 | | | | |
|---|---|---|---|---|
| Foil No. | Acc. ageing for 0 hours | Acc. ageing for 14 hours | Acc. ageing for 37 hours | Acc. ageing for 67 hours |
| 40416-01 | 5 | 5 | 5 | 3 |
| 40416-02 | 5 | 5 | 4 | 3 |
| 40416-03 | 5 | 5 | 4 | 4 |
| 40416-04 | 5 | 2 | 1 | --- |
| 40416-05 | 5 | 5 | 4 | 3 |
| 40416-06 | 5 | 5 | 3 | 2 |
| 40416-07 | 5 | 5 | 4 | 4 |
| 40416-08 | 5 | 5 | 4 | 4 |
| 40416-09 | 5 | 5 | 4 | 4 |
| 40416-14 | 5 | 2 | 1 | --- |
| 40416-15 | 5 | 5 | 4 | 3 |
| 40416-16 | 5 | 5 | 5 | 5 |
| 40416-17 | 5 | 5 | 5 | 5 |
| 40416-18 | 5 | 5 | 5 | 4 |
| 40416-19 | 5 | 5 | 5 | 5 |
| | | | | |

| Table 11 | | | | |
|---|---|---|---|---|
| Foil No. | Acc. ageing for 0 hours | Acc. ageing for 14 hours | Acc. ageing for 37 hours | Acc. ageing for 67 hours |
| FG-1H | 5 | 2 | 1 | --- |
| FG-1 | 5 | 2 | 1 | --- |
| FG-2 | 5 | 5 | 3 | 3 |
| FG-3 | 5 | 5 | 4 | 3 |
| FG-4 | 5 | 5 | 4 | 3 |
| FG-5 | 5 | 5 | 4 | 4 |

It is clearly shown that the degradation time of thermoplastic compositions subjected to accelerated ageing in an air circulated convection oven is highly controllable through the variation of the added amount of fat-soluble iron compound, type and amount of other additives and the composition of the thermoplastic itself. It is thus to be expected that the degradation times of thermoplastic compositions that are subjected to natural ageing also are highly controllable.

## Claims

1. Method for the preparation of an additive for providing controllable degradation thermoplastics of very light colours, which do not degrade too rapid to allow conventional methods for their processing, like film blowing, extrusion, and injection moulding, **characterized in that** a metal salt at its highest stable oxidation state is reacted with a C₈ - C₂₄ fatty acid or a C₈ - C₂₄ fatty acid derivative under formation of a fat-soluble metal compound and at least one volatile reaction product in a process in which a convenient oxidizing agent ensures that all of the metal in the end product remains in its highest oxidation state.

2. Method as claimed in claim 1, **characterized in that** said oxidizing agent comprises hydrogen peroxide and e.g. consists of a 0.1-5 % hydrogen aqueous peroxide solution.

3. Method as claimed in claim 1, **characterized in that** said oxidizing agent comprises organic peroxides and hydro peroxides.

4. Method as claimed in claim 1, **characterized in that** said oxidizing agent comprises air or oxygen enriched air.

5. Method as claimed in one of the claims 1-4, **characterized in that** said metal salt is a chloride.

6. Method as claimed in one of the claims 1-5, **characterized in that** said C₈ - C₂₄ fatty acid or a C₈ - C₂₄ fatty acid derivative is added in a stoichiometric excess, e.g. a 20% excess, in relation to the metal salt.

7. Method as claimed in one of the claims 1-2 or 5-6, **characterized in that** the fat soluble metal compound is washed with an aqueous solution of hydrogen peroxide to remove any remains of unreacted metal salt, dispersed in an aqueous diluted solution of the hydrogen peroxide at 35-55 °C for 1 to 3 hours, washed with water and dried in a convection oven.

8. Method as claimed in one of the claims 1-7, **characterized in that** said C₈ - C₂₄ fatty acid or a C₈ - C₂₄ fatty acid derivative is stearic acid.

9. Method as claimed in any one of the preceding claims, **characterized in that** it also includes the addition of some wax to bind the product to solid lumps that does not release dust.

10. Method as claimed in any one of the preceding claims, **characterized in that** the volatile reaction products and/ or reactants are eliminated by azeotropic distillation.

11. Method as claimed in any one of the preceding claims, **characterized in that** the metal salt is an iron salt of which the highest oxidation state is 3.

12. Additive for controlling the degradation time of products like thermoplastics, oil and the like, **characterized in that** the additive is prepared as defined by any one of the claims 1-11.

13. Additive as claimed in claim 12, **characterized in that** it is included as one of several elements of a master batch being tailored for a particular application.

14. Use of additive as claimed in claim 12 or claim 13 in thermoplastics in combination with at least one per se known additive chosen among antioxidants, radical scavengers, UV absorbers, amines, peroxides, and/ or peroxide forming substances for thermoplastics or blends thereof.

15. Use as claimed in claim 12, said thermoplastic being polyethylene, polypropylene or any combination of polyethylene and polypropylene.

16. Use as claimed in claim 14 or claim 15, the type and amount of said per se known additive or additives being chosen and adapted respectively so that the desired degradation time is achieved for the actual thermoplastic material or blend of thermoplastic materials.

17. Use as claimed in any one of claims 14-16, where said per se known additive is chosen among Sanduvor PR25, Chimassorb 81, Cyasorb UV 5911, Tinuvin 326, and Tinuvin 1577.

18. Use as claimed in any one of claims 14-17, where said per se known additives are present in a relative amount of from 0.03 to 10 % by weight of the thermoplastic material or the blend of thermoplastic materials, preferably from 0.05 to 0.5 %.

19. Method for the manufacture of a very light-coloured thermoplastic material which may be film blown, extruded and/ or injection moulded and which yet is degradable in less than one year under influence of light, **characterised in that** an additive as claimed in claim 12 is added to the thermoplastic in an amount of at least 0.03 % by weight of the thermoplastic material, in combination with a per se known antioxidant.

20. Method as claimed in claim 19, **characterized in that** the amount of additive is adapted to the chosen type of and amount of antioxidant in order to control the processibility of the manufactured thermoplastic as well as its degradation time under influence of light.

21. Method as claimed in claims 19-20, **characterised in that** additive is ferric(III) stearate and that it is being added in an amount of at least 0.1 % by weight of the thermoplastic material.

22. Method as claimed in claim 21, **characterized in that** a 0.5 % by weight solution of ferric(III)stearate in an aliphatic hydrocarbon, e.g. poly(1-deken), has a Gardner Colour Number according to ASTM 1544, that is 4 or less than 4.

23. Method as claimed in any one of claims 19-22, **characterized in that** said antioxidant is chosen among so-called process stabilizers, like phosphites, thio synergists, CH-acid radical scavengers, and phenolic antioxidants.

24. Method as claimed in any one of claims 19-23, **characterized in that** the manufacture comprises compounding in an extruder or the like.

25. Very light-coloured thermoplastic material that may be film blown, extruded and/ or injection moulded and which yet will degrade in less than one year under influence of light, **characterized in that** it is manufactured according to one of claims 19-21 (should be 19-24).

## Patentansprüche

1. Verfahren für die Herstellung eines Additivs zum Bereitstellen von Thermoplasten, die einen kontrollierbaren Abbau und sehr helle Farben besitzen, die sich nicht zu schnell abbauen, so dass konventionelle Verfahren für deren Verarbeitung anwendbar sind, wie Folienblasen, Extrusion und Spritzgießen, **dadurch gekennzeichnet, dass** ein Metallsalz in seiner höchsten, stabilen Oxidationsstufe mit einer C₈-C₂₄-Fettsäure oder einem C₈-C₂₄-Fettsäurederivat umgesetzt wird, unter Bildung einer fettlöslichen Metallverbindung und mindestens eines flüchtigen Reaktionsprodukts in einem Verfahren, bei dem ein geeignetes Oxidationsmittel gewährleistet, dass das ganze Metall im Endprodukt in seiner höchsten Oxidationsstufe verbleibt.

2. Verfahren wie in Anspruch 1 beansprucht, **dadurch gekennzeichnet, dass** besagtes Oxidationsmittel Wasserstoffperoxid umfasst, und z.B. aus einer 0,1 bis 5 %igen wässrigen Wasserstoffperoxidlösung besteht.

3. Verfahren wie in Anspruch 1 beansprucht, **dadurch gekennzeichnet, dass** besagtes Oxidationsmittel organische Peroxide und Hydroperoxide umfasst.

4. Verfahren wie in Anspruch 1 beansprucht, **dadurch gekennzeichnet, dass** besagtes Oxidationsmittel Luft oder mit Sauerstoff angereicherte Luft umfasst.

5. Verfahren wie in einem der Ansprüche 1 bis 4 beansprucht, **dadurch gekennzeichnet, dass** besagtes Metallsalz ein Chlorid ist.

6. Verfahren wie in einem der Ansprüche 1 bis 5 beansprucht, **dadurch gekennzeichnet, dass** besagte C₈-C₂₄-Fettsäure oder ein C₈-C₂₄-Fettsäurederivat in einem stöchiometrischem Überschuss, z.B. einem 20 %igen Überschuss, in Relation zum Metallsalz zugegeben wird.

7. Verfahren wie in einem der Ansprüche 1 bis 2 oder 5 bis 6 beansprucht, **dadurch gekennzeichnet, dass** die fettlösliche Metallverbindung mit einer wässrigen Lösung von Wasserstoffperoxid gewaschen wird, um jegliche Rückstände an nicht umgesetztem Metallsalz zu entfernen, in einer wässrigen verdünnten Lösung des Wasserstoffperoxids bei 35 bis 55° C für 1 bis 3 Stunden dispergiert wird, mit Wasser gewaschen wird und in einem Konvektionsofen getrocknet wird.

8. Verfahren wie in einem der Ansprüche 1 bis 7 beansprucht wird, **dadurch gekennzeichnet, dass** besagte C₈-C₂₄-Fettsäure oder ein C₈-C₂₄-Fettsäurederivat Stearinsäure ist.

9. Verfahren wie in einem der vorhergehenden Ansprüche beansprucht, **dadurch gekennzeichnet, dass** es auch die Zugabe von etwas Wachs beinhaltet, um das Produkt zu festen Klumpen zu binden, das keinen Staub freisetzt.

10. Verfahren wie in einem der vorhergehenden Ansprüche beansprucht, **dadurch gekennzeichnet, dass** die flüchtigen Reaktionsprodukte und/oder Reaktanten durch eine azeotrope Destillation entfernt werden.

11. Verfahren wie in einem der vorhergehenden Ansprüche beansprucht, **dadurch gekennzeichnet, dass** das Metallsalz ein Eisensalz ist, bei dem die höchste Oxidationsstufe 3 ist.

12. Additiv zum Kontrollieren der Abbauzeit von Produkten wie Thermoplaste, Öl, etc., **dadurch gekennzeichnet, dass** das Additiv hergestellt wird, wie in einem der Ansprüche 1 bis 11 definiert ist.

13. Additiv wie in Anspruch 12 beansprucht, **dadurch gekennzeichnet, dass** es als eines von mehreren Elementen eines Masterbatches, das für eine bestimmte Anwendung maßgeschneidert ist, enthalten ist.

14. Verwendung des Additivs wie in Anspruch 12 oder Anspruch 13 beansprucht ist, in Thermoplasten in Kombination mit mindestens einem an sich bekannten Additiv, ausgewählt unter Antioxidantionsmitteln, Radikalfängern, UV-Absorbern, Aminen, Peroxiden, und/oder peroxidbildenden Substanzen für Thermoplasten oder Blends davon.

15. Verwendung wie in Anspruch 12 beansprucht, wobei besagter Thermoplast Polyethylen, Polypropylen oder eine Kombination aus Polyethylen und Polypropylen ist.

16. Verwendung wie in Anspruch 14 oder Anspruch 15 beansprucht, wobei die Art und Menge des an sich bekannten Additivs oder der an sich bekannten Additive entsprechend ausgewählt und angepasst wird, so dass die gewünschte Abbauzeit für das jeweilige thermoplastische Material oder dem Blend aus thermoplastischen Materialien erreicht wird.

17. Verwendung wie in einem der Ansprüche 14 bis 16 beansprucht, wobei besagtes an sich bekanntes Additiv ausgewählt ist unter Sanduvor PR25, Chimassorb 81, Cyasorb UV 5911, Tinuvin 326 und Tinuvin 1577 ist.

18. Verwendung wie in einem der Ansprüche 14 bis 17 beansprucht, wobei besagte an sich bekannte Additive in einer relativen Menge von 0,03 bis 10 Gew.% des thermoplastischen Materials oder des Blends aus thermoplastischen Materialien, bevorzugt von 0,05 bis 0,5 %, vorhanden sind.

19. Verfahren für die Herstellung eines sehr hell gefärbten thermoplastischen Materials, das foliengeblasen, extrudiert und/oder spritzgeblasen sein kann, und das dennoch in weniger als einem Jahr unter der Einwirkung von Licht abbaubar ist, **dadurch gekennzeichnet, dass** ein Additiv wie in Anspruch 12 beansprucht zum Thermoplasten in einer Menge von mindestens 0,03 Gew.% des thermoplastischen Materials zugegeben wird, in Kombination mit einem an sich bekannten Antioxidationsmittel.

20. Verfahren wie in Anspruch 19 beansprucht, **dadurch gekennzeichnet, dass** die Menge an Additiv angepasst wird an die ausgewählte Art und Menge an Antioxidationsmittel, um die Verarbeitbarkeit des hergestellten Thermoplasten, so wie seine Abbauzeit unter der Einwirkung von Licht zu kontrollieren.

21. Verfahren wie in den Ansprüchen 19 bis 20 beansprucht, **dadurch gekennzeichnet, dass** das Additiv Eisen(III)stearat ist, das in einer Menge von mindestens 0,1 Gew.% des thermoplastischen Materials zugegeben wird.

22. Verfahren wie in Anspruch 21 beansprucht, **dadurch gekennzeichnet, dass** eine 0,5 gew.%ige Lösung an Eisen(III)stearat in einem aliphatischen Kohlenwasserstoff, z.B. Poly(1-decen), eine Gardner Farbnummer gemäß ASTM 1544 besitzt, die 4 oder weniger als 4 ist.

23. Verfahren wie in einem der Ansprüche 19 bis 22 beansprucht, **dadurch gekennzeichnet, dass** besagtes Antioxidationsmittel ausgewählt ist unter sogenannten Prozessstabilisatoren, wie Phosphiten, Thiosynergisten, CH-Säure Radikalfängern und phenolischen Antioxidationsmitteln.

24. Verfahren wie in einem der Ansprüche 19 bis 23 beansprucht, **dadurch gekennzeichnet, dass** die Herstellung das Kompoundieren in einem Extruder etc. umfasst.

25. Sehr hell gefärbtes thermoplastisches Material, dass foliengeblasen, extrudiert und/oder spritzgegossen sein kann, und das dennoch in weniger als einem Jahr unter der Einwirkung von Licht abgebaut wird, **dadurch gekennzeichnet, dass** es gemäß einem der Ansprüche 19 bis 21 (sollte 19-24 sein) hergestellt ist.

## Revendications

1. Procédé de préparation d'un additif pour fournir des thermoplastiques à dégradation contrôlable de couleur très claire, qui ne se dégradent pas trop rapidement pour permettre l'utilisation de procédés conventionnels pour leur transformation, comme le soufflage de feuille, l'extrusion et le moulage par injection, **caractérisé en ce qu'**un sel métallique à son état d'oxydation stable le plus élevé est mis en réaction avec un acide gras en C₈-C₂₄ ou un dérivé d'acide gras en C₈-C₂₄ avec formation d'un composé métallique liposoluble et au moins un produit de réaction volatil dans un procédé dans lequel un agent oxydant convenable garantit que tout le métal dans le produit final reste à son état d'oxydation le plus élevé.

2. Procédé selon la revendication 1, **caractérisé en ce que** ledit agent oxydant comprend du peroxyde d'hydrogène et, par exemple, est constitué d'une solution aqueuse de peroxyde d'hydrogène à 0,1-5 %.

3. Procédé selon la revendication 1, **caractérisé en ce que** ledit agent oxydant comprend des peroxydes organiques et des hydro-peroxydes.

4. Procédé selon la revendication 1, **caractérisé en ce que** ledit agent oxydant comprend de l'air ou de l'air enrichi en oxygène.

5. Procédé selon l'une des revendications 1-4, **caractérisé en ce que** ledit sel métallique est un chlorure.

6. Procédé selon l'une des revendications 1-5, **caractérisé en ce que** ledit acide gras en C₈-C₂₄ ou un dérivé d'acide gras en C₈-C₂₄ est ajouté en excès stoechiométrique, par exemple un excès de 20 %, relativement au sel métallique.

7. Procédé selon l'une quelconque des revendications 1-2 ou 5-6, **caractérisé en ce que** le composé métallique liposoluble est lavé avec une solution aqueuse de peroxyde d'hydrogène pour enlever tout reste de sel métallique non réagi, dispersé dans une solution diluée aqueuse de peroxyde d'hydrogène à 35-55 °C pendant 1 à 3 heures, lavé avec de l'eau et séché dans un four à convexion.

8. Procédé selon l'une des revendications 1-7, **caractérisé en ce que** ledit acide gras en C₈-C₂₄ ou le dérivé d'acide gras en C₈-C₂₄ est l'acide stéarique.

9. Procédé selon l'une quelconque des revendications précédentes, **caractérisé en ce qu'**il comprend également l'addition de cire pour lier le produit à des morceaux solides qui ne libèrent pas de poussière.

10. Procédé selon l'une quelconque des revendications précédentes, **caractérisé en ce que** les produits de réaction volatils et/ou les réactifs sont éliminés par distillation azéotropique.

11. Procédé selon l'une quelconque des revendications précédentes, **caractérisé en ce que** le sel métallique est un sel de fer dont l'état d'oxydation le plus élevé est 3.

12. Additif pour le contrôle du temps de dégradation des produits comme les thermoplastiques, l'huile et similaire, **caractérisé en ce que** l'additif est préparé comme défini par l'une quelconque des revendications 1-11.

13. Additif selon la revendication 12, **caractérisé en ce qu'**il est compris comme un des plusieurs éléments d'un mélange maître réalisé sur mesure pour une application particulière.

14. Utilisation d'un additif selon la revendication 12 ou la revendication 13, dans des thermoplastiques en combinaison avec au moins un additif connu en soi, choisi parmi des antioxydants, des capteurs de radicaux, des absorbeurs d'UV, des amines, des peroxydes, et/ou des substances formant un peroxyde pour les thermoplastiques ou mélanges correspondants.

15. Utilisation selon la revendication 12, ledit thermoplastique étant un polyéthylène, un polypropylène ou n'importe quelle combinaison de polyéthylène et de polypropylène.

16. Utilisation selon la revendication 14 ou la revendication 15, le type et la quantité dudit additif ou desdits additifs connus en soi étant respectivement choisis et adaptés de sorte que le temps de dégradation souhaité soit atteint pour le matériau thermoplastique effectif ou le mélange de matériaux thermoplastiques.

17. Utilisation selon l'une quelconque des revendications 14-16, dans laquelle ledit additif connu en soi est choisi parmi le Sanduvor PR25, le Chimassorb 81, le Cyasorb UV 5911, le Tinuvin 326 et le Tinuvin 1577.

18. Utilisation selon l'une quelconque des revendications 14-17, dans laquelle lesdits additifs connus en soi sont présents dans une quantité relative de 0,03 à 10 % en poids du matériau thermoplastique ou du mélange de matériaux thermoplastiques, de préférence de 0,05 à 0,5 %.

19. Procédé pour la fabrication d'un matériau thermoplastique très légèrement coloré qui peut être soufflé en feuille, extrudé et/ou moulé par injection et qui est toutefois dégradable en moins d'un an, sous l'influence de la lumière, **caractérisé en ce qu'**un additif, selon la revendication 12, est ajouté au thermoplastique, dans une quantité d'au moins 0,03 % en poids du matériau thermoplastique, en combinaison avec un antioxydant connu en soi.

20. Procédé selon la revendication 19, **caractérisé en ce que** la quantité d'additif est adaptée au type choisi et à la quantité d'antioxydant, afin de contrôler la capacité de transformation du thermoplastique fabriqué ainsi que son temps de dégradation sous l'influence de la lumière.

21. Procédé selon les revendications 19-20, **caractérisé en ce que** l'additif est un stéarate ferrique (III) et qu'il est ajouté dans une quantité d'au moins 0,1 % en poids du matériau thermoplastique.

22. Procédé selon la revendication 21, **caractérisé en ce qu'**une solution à 0,5 % en poids de stéarate ferrique (III) dans un hydrocarbure aliphatique, par exemple un poly(1-décène) a un Indice de couleur Gardner selon la norme ASTM 1544, qui est de 4 ou inférieur à 4.

23. Procédé selon l'une quelconque des revendications 19-22, **caractérisé en ce que** ledit antioxydant est choisi parmi les stabilisateurs de procédé, comme les phosphites, les synergistes thio, les capteurs de radicaux acides CH et les antioxydants phénoliques.

24. Procédé selon l'une quelconque des revendications 19-23, **caractérisé en ce que** la fabrication comprend le mélangeage dans une extrudeuse ou similaire.

25. Matériau thermoplastique très légèrement coloré qui peut être soufflé en feuille, extrudé et/ou moulé par injection et qui se dégradera toutefois en moins d'un an sous l'influence de la lumière, **caractérisé en ce qu'**il est fabriqué selon l'une des revendications 19-21 (ou plutôt 19-24).
